(19) **Europäisches Patentamt**

**European Patent Office**

**Office européen des brevets**

(11) **EP 1 315 917 B1**

(12) **FASCICULE DE BREVET EUROPEEN**

(45) Date de publication et mention
de la délivrance du brevet:
**19.04.2006 Bulletin 2006/16**

(21) Numéro de dépôt: **02747510.2**

(22) Date de dépôt: **06.06.2002**

(51) Int Cl.:
**F16F 1/32** *(2006.01)* **H02K 35/02** *(2006.01)*

(86) Numéro de dépôt international:
**PCT/FR2002/001926**

(87) Numéro de publication internationale:
**WO 2002/099306 (12.12.2002 Gazette 2002/50)**

(54) **DISPOSITIF D'AMORTISSEMENT DE VIBRATIONS**

SCHWINGUNGSDÄMPFUNGSVORRICHTUNG

VIBRATION DAMPING DEVICE

(84) Etats contractants désignés:
**AT BE CH CY DE DK ES FI FR GB GR IE IT LI LU
MC NL PT SE TR**

(30) Priorité: **06.06.2001 FR 0107353**

(43) Date de publication de la demande:
**04.06.2003 Bulletin 2003/23**

(73) Titulaire: **HUTCHINSON
75008 Paris (FR)**

(72) Inventeur: **NOE, Mathieu
F-91610 Ballancourt (FR)**

(74) Mandataire: **Jacquard, Philippe Jean-Luc et al
Cabinet Orès
36, rue de St Pétersbourg
75008 Paris (FR)**

(56) Documents cités:
**DE-A- 2 100 831       DE-A- 19 823 716
FR-A- 2 454 020       US-A- 5 709 516**

**Description**

La présente invention a pour objet un dispositif d'amortissement de vibrations.

On utilise dans l'industrie des batteurs dynamiques pour éviter la propagation de vibrations dans une structure donnée.

Ils sont essentiellement basés sur des systèmes masse-ressort.

Le document DE-A- 198 23716 montre un dispositif d' amortissement de vibrations selon le préambule de la revendication 1.

L'utilisation de batteurs dynamiques pose le problème du fonctionnement selon une seule direction qui est celle de l'axe de symétrie du système.

Le problème posé est ainsi le fait de garantir des déplacements selon cet axe uniquement pour éviter des inconvénients tels que vibrations, parasites, frottements, voir une destruction de la bobine.

L'invention vise à résoudre ce problème, l'idée de base étant la mise en oeuvre d'un ou plusieurs ressorts de centrage appropriés.

L'invention concerne un dispositif d'amortissement de vibrations **tel que défini dans la revendication 1.**

Au moins une découpe peut être au moins en partie en spirale, par exemple en spirale parabolique.

Au moins une découpe peut présenter un tronçon externe droit.

Chaque découpe fait avantageusement entre 1 et 1,5 tour du périmètre de ressort.

Les découpes peuvent être au nombre de 3 et de préférence de 4, et dans ce dernier cas chaque découpe s'étend préférentiellement sur sensiblement un tour du périmètre de ressort.

Il est particulièrement avantageux qu'un ressort de centrage soit constitué d'un empilement de ressorts plats, notamment pour former une structure lamifiée. En effet, la raideur axiale et la contrainte maximale atteinte diminuent avec le nombre de couches empilées, ce qui permet en particulier d'adapter le rapport entre la raideur axiale et la raideur radiale du ressort de centrage. En outre, la contrainte maximale atteinte diminue avec l'épaisseur de chaque couche.

D'autres caractéristiques et avantages de l'invention apparaîtront mieux à la lecture de la description qui va suivre, donnée à titre d'exemple non limitatif, en liaison avec les dessins dans lesquels :

- la figure 1 montre une vue schématique en coupe d'un dispositif selon l'invention,
- les figures 2a et 2b représentent respectivement en perspective et en coupe un dispositif selon un mode de réalisation préféré de l'invention, selon lequel la partie mobile est suspendue par quatre ressorts hélicoïdaux $22_1$ à $22_4$.
- la figure 3 montre une réalisation d'un ressort de centrage ("spider") à trois branches, et
- la figure 4 montre une réalisation d'un ressort de centrage ("spider") à quatre branches.

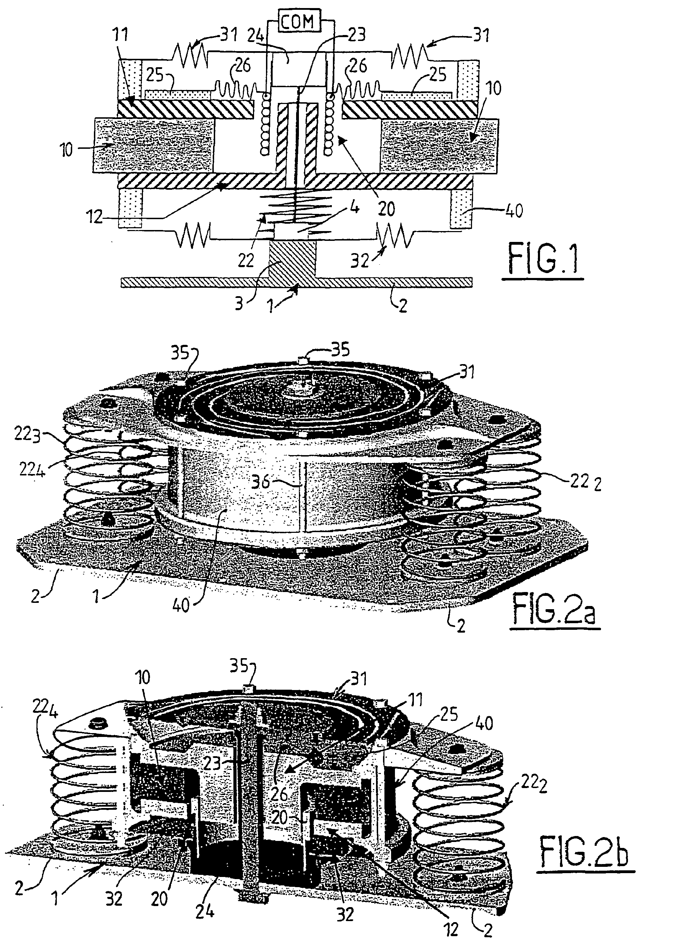

Le batteur représenté à la figure 1 présente une embase 1 comportant une plaque plane 2 destinée à être solidarisée à une structure à calmer. Une bobine 20 est solidaire de cette embase 1. A cet effet, une tige 23 porte à ses deux extrémités deux brides 3 et 24 dont l'une 3 est solidaire de l'embase 1 et dont l'autre 24 porte la bobine 20. La partie mobile qui comporte une pièce polaire supérieure 11, une pièce polaire inférieure 12 et un aimant 10 est montée sur un ressort 22 et est centrée par deux ressorts de centrage supérieur 31 et supérieur 32 montés sur un boîtier ou saladier 40.

On notera au niveau de la bobine 20 l'étanchéité procurée par le tissu ondulé 26 porté par l'anneau plat 26 monté sur la pièce polaire 11.

L'ensemble définit un moteur électrodynamique dont la bobine est fixe par rapport à l'embase 1 et ont la partie mobile est une masse $M_b$ constituée essentiellement par le circuit magnétique, c'est-à-dire les pièces polaires 11 et 12 et l'aimant 10.

Un circuit de commande permet de faire varier la valeur d'une charge résistive appliquée aux bornes de la bobine 20. Il peut s'agir d'une résistance variable, par exemple une varistance, dont la valeur est fonction d'une tension électrique, ou bien encore d'un rhéostat commandé par le dispositif de commande. On peut faire ainsi varier l'amortissement entre deux extrêmes, à savoir un amortissement très faible en laissant la bobine 20 en circuit ouvert, ou un amortissement maximal en mettant la bobine 20 en court-circuit, la résistance de charge étant alors égale à la composante résistive intrinsèque Ro de la bobine 20.

On peut choisir une valeur d'une résistance de charge plus élevée $R_1$ pour un premier amortissement relativement faible et plus faible $R_2$ pour un amortissement plus important.

Un amortissement relativement faible ou minimal convient particulièrement à un aéronef en vol statique, pour lequel les vibrations ont un régime établi pour lequel on confère au batteur un effet maximal, alors qu'un amortissement plus important peut être choisi lors d'un changement de cap pour éviter les transitoires susceptibles de déstabiliser le batteur et/ou de faire remonter le niveau vibratoire en cabine.

Lorsque le batteur fonctionne, un mouvement relatif entre le circuit magnétique de masse $M_b$ et l'embase 1 existe. La bobine 20 se comporte donc comme un générateur de force électromotrice $E_b$ = BL v, BL désignant le facteur de force du moteur électrodynamique (en N/A) et v la vitesse relative entre le circuit magnétique de masse $M_b$ et l'embase 1.

On connecte la bobine 20 d'impédance électrique $Z_b$ à une charge notée $Z_c$. Une force $F_a$ s'établit entre la bobine et le circuit de masse $M_b$, qui s'oppose à v (selon la loi de Lenz) et a pour expression :

$$F_a = \frac{(BL)^2}{Z_b + Z_c} V \qquad\qquad (1)$$

Nous venons de mettre en évidence l'expression d'une force d'amortissement.

Si on suppose que la charge est constituée d'un rhéostat (résistance réglable), nous pouvons alors faire varier le coefficient d'amortissement $C_b$ ($C_b = F_a / v$) entre 2 valeurs extrêmes.

Pour obtenir $C_b$ maximum :

- il faut choisir un moteur électrodynamique dont les caractéristiques permettent de maximiser le rapport $(BL)^2 / Z_b$
- $Z_c$ doit être minimal ($Z_c = 0$, soit un court-circuit franc)

Pour obtenir $C_b$ minimum :

- il suffit d'ouvrir le circuit électrique ($Z_c = \infty$)

L'accord en fréquence du batteur est donné par la masse mobile et l'ensemble des raideurs qui lient cette masse à l'embase :

    1. Raideur totale des ressorts de centrage 31 et 32 : Ks
    2. Raideur totale du (des) ressort(s) de rappel 22 :Kr

Nous avons alors la relation :

$$M_b *(2*\pi*F_b)^2 = Ks + Kr \qquad\qquad (2)$$

Pour répartir la raideur entre les ressorts de rappel et les ressorts de centrage 31 et 32, nous considérons les contraintes suivantes :

    1. Les ressorts de centrage 31 et 32 ne sont pas sollicités lorsque la masse $M_b$ est soumise à une fois la gravité.
    2. La somme Ks + Kr est fixée pour respecter la relation (2).

La contrainte n° 1 impose que le poids statique de la masse mobile $M_b$ soit repris par le(s) ressort(s) 22. Leur longueur à vide est donc calculée pour tenir compte de cette flèche statique, qui s'ajoute au mouvement dynamique : plus la raideur Kr est faible, plus la longueur à vide doit être grande. Il faut donc choisir Kr suffisamment élevé pour que ne se posent pas certaines difficultés d'intégration (encombrement, talonnement des ressorts, spires jointives).

Il n'est pas possible en pratique de faire tendre Ks vers une valeur arbitrairement faible, pour les raisons exposées ci-après.

Le batteur décrit fonctionne en une seule direction qui est celle de l'axe de symétrie du système (axe vertical Z sur la figure 1, passant par le centre de la pièce).

Il convient de garantir un mouvement relatif entre le circuit magnétique de masse $M_b$ et l'embase 1 selon cet axe uniquement afin d'éviter tout risque de destruction mécanique de la bobine 20.

Sont donc exclus a priori :

- les déplacements radiaux (selon les directions X et Y perpendiculaires à la direction Z)
- les rotations selon les axes X et Y

Pour assurer cette fonction, la masse $M_b$ est guidée par deux ressorts 31 et 32 disposés de part et d'autre du circuit de masse $M_b$. Ils sont solidaires en leur centre d'un axe 23 solidaire de l'embase 1 et à leur pourtour du circuit de masse $M_b$.

Parmi les autres techniques de guidage qui auraient pu être retenues citons :

1. Les douilles à billes : solution plus onéreuse, nécessitant un axe rectifié. De plus, les caractéristiques de frottement sec sont non linéaires et évoluent avec le temps (usure des zones de contact), ce qui aurait pour conséquence de modifier le comportement du batteur au cours de son cycle de vie. Il serait de plus nécessaire d'y adjoindre un système de blocage en rotation de la masse $M_b$ selon l'axe Z.

2. Les paliers polymères : solution nécessitant également un axe rectifié. De plus, les caractéristiques de frottement sec sont non linéaires et évoluent avec le temps (usure des zones de contact), ce qui aurait pour conséquence de modifier le comportement du batteur au cours de son cycle de vie. Il serait de plus nécessaire d'y adjoindre un système de blocage en rotation de la masse $M_b$ selon l'axe Z.

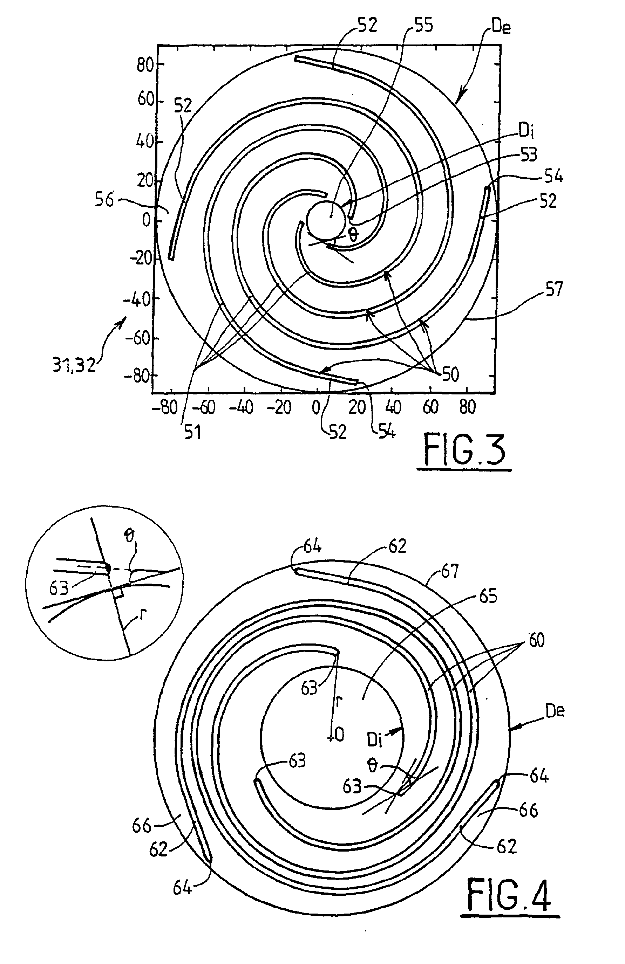

La figure 3 représente un ressort de centrage 31, 32 en métal, qui présente 4 découpes 50 (ou saignées traversantes) qui forment autant de branches qui sont réparties régulièrement à 90° du périmètre d'une ouverture 55 et qui s'étendent depuis une extrémité interne 53 à proximité de l'ouverture centrale 55 de diamètre $D_i$ et, jusqu'à une extrémité externe 54 à proximité d'un contour externe 57 de diamètre De. Ces découpes 50 ont un profil arrondi convexe vers l'extérieur du ressort, en particulier en forme de spirale, et de préférence de spirale parabolique.

Vers leur extrémité 54, les découpes 50 présentent préférentiellement un tronçon linéaire 52 dont la fonction est d'éviter des concentrations de contraintes ainsi qu'il sera expliqué ci-après. Dans l'exemple représenté, les branches 50 forment un peu plus d'un tour du périmètre du ressort entre leurs extrémités 53 et 54.

La figure 4 représente un mode de réalisation à 3 branches dont les extrémités internes 63 sont réparties à 90° sur le pourtour d'une ouverture centrale de diamètre Di et qui évoluent jusqu'à une extrémité 64 à proximité du contour externe 67 de diamètre De. Comme dans le cas précédent, le profil est avantageusement en spirale, de préférence parabolique. Il s'étend sur un peu plus d'un tour du ressort. Un tronçon d'extrémité linéaire 62 est avantageusement prévu pour éviter des concentrations de contraintes.

Les extrémités 53, 54, 63, 64 sont suffisamment espacées des ouvertures 55, 65 et des contours respectifs 57, 67 pour permettre un bon encastrement du ressort sans concentration de contraintes à ces extrémités.

Il est particulièrement avantageux de réaliser les ressorts 31, 32 sous forme d'un empilement de ressorts par exemple sous forme d'une structure lamifiée c'est-à-dire d'un empilement de ressorts individuels solidarisés entre eux par exemple par collage. Ceci permet de modifier la raideur axiale qui diminue avec le nombre de couches, de même que la contrainte maximale atteinte.

Ceci permet en particulier d'ajuster le rapport entre la raideur axiale et la raideur radiale.

Les avantages des ressorts de centrage 31 et 32 sont les suivants :

1. Aucun contact entre pièces mobiles : aucune non linéarité n'est introduite, pas de frottements parasites.
2. Simplicité de réalisation.

La réalisation des ressorts de centrage 31 et 32 respecte avantageusement un certain nombre de contraintes :

1. Raideur axiale (selon axe Z) : elle doit être inférieure à une valeur maximale $Kz = M_b*(2*\pi*F_b)^2$
2. Raideur radiale (dans le plan X, Y), selon n'importe quelle direction radiale : elle doit être suffisamment grande pour éviter que les sollicitations radiales appliquées au batteur ne conduisent à des déplacements radiaux relatifs entre la bobine et le circuit magnétique par flambage des ressorts tels qu'ils pourraient conduire à l'endommagement de ladite bobine. Cette caractéristique doit également être maintenue quelle que soit la position de la masse mobile selon l'axe Z. Il faut donc éliminer les conceptions de ressorts qui sont susceptibles de flamber aux excursions maximum de la masse mobile. L'adoption de ressorts de centrage présentant des découpes formant des branches concaves vers l'extérieur permet d'éviter le flambage.
3. Rapport encombrement (radial) / débattement du ressort aussi faible que possibles.
4. Contraintes maximales dans la matière telle que la pièce soit dimensionnée pour un nombre de cycles très important (> $10^8$ cycles). L'état de contrainte maximale est atteint pour les débattements crête.

Le mode de réalisation préféré met en oeuvre des découpes en spirale parabolique (ou selon un ou plusieurs axes de cercle approximant un profil en spirale parabolique).

Les paramètres de conception sont :

1. Le nombre de branches (au moins 2, de préférence 4).

2. Diamètres intérieur $D_i$ et extérieur De.

3. Epaisseur du ressort.

4. Angle de départ θ de la découpe (côté diamètre intérieur)-(voir encadré figure 4). Plus la valeur de θ est voisine de 90°, plus la variation de contrainte est progressive. Lorsque θ est proche de 0°, ou a une variation brusque de la contrainte dans la zone de l'encastrement.

5. Arrêt de la découpe (côté diamètre extérieur) : l'arrêt se fait progressivement sur une section de matière 56, 66 qui s'évase de manière pratiquement triangulaire, ceci afin d'éviter les concentrations locales de contraintes sur les faibles rayons de courbure. A cet effet, on peut adopter pour les branches un profil terminal linéaire 52, 62.

**Revendications**

1. Dispositif d'amortissement de vibrations comprenant un dispositif de conversion d'énergie monté sur une embase destinée à être fixée sur une structure, le dispositif de conversion d'énergie comprenant une partie mobile qui présente au moins un ressort de centrage plat (31, 32) s'étendant entre une région intérieure (55, 65) ayant un premier diamètre ($D_i$) et une région extérieure (57, 67) ayant un deuxième diamètre (De), ledit ressort de centrage (31, 32) présentant au moins deux découpes (50, 60) dont chacune forme une branche ayant au moins un tronçon (51, 61) tournant sa concavité vers l'extérieur (67) du ressort (31, 32), **caractérisé en ce que** la partie mobile est suspendue par au moins un ressort de type ressort hélicoïdal ($22, 22_1$ à $22_4$).

2. Dispositif selon la revendication 1, **caractérisé en ce qu'**au moins une découpe (50, 60) est au moins en partie en spirale.

3. Dispositif selon la revendication 2, **caractérisé en ce qu'**au moins un tronçon (51, 61) est une portion de spirale parabolique.

4. Dispositif selon une des revendications 1 à 3, **caractérisé en ce qu'**au moins une découpe (50, 60) présente un tronçon extérieur droit (52, 62).

5. Dispositif selon une des revendications 1 à 4, **caractérisé en ce que** chaque découpe fait entre 1 et 1,5 tour du périmètre du ressort de centrage (31, 32).

6. Dispositif selon une des revendications 1 à 4, **caractérisé en ce que** le ressort de centrage (31, 32) comporte 3 découpes (50, 60).

7. Dispositif selon une des revendications 1 à 5, **caractérisé en ce que** le ressort de centrage (31, 32) comporte 4 découpes (50, 60).

8. Dispositif selon la revendication 7, **caractérisé en ce que** chaque découpe (50, 60) s'étend sur sensiblement un tour du périmètre du ressort de centrage (31, 32).

9. Dispositif selon une des revendications précédentes, **caractérisé en ce que** le ressort de centrage (31, 32) est constitué d'un empilement de ressorts plats individuels.

**Patentansprüche**

1. Schwingungsdämpfungsvorrichtung umfassend eine Vorrichtung zur Energieumwandlung, die auf einer Grundplatte angebracht ist, welche dazu bestimmt ist, an einer Struktur befestigt zu werden, wobei die Vorrichtung zur Energieumwandlung ein bewegliches Teil umfasst, das wenigstens eine flache Zentrierfeder (31, 32) aufweist, die sich zwischen einem Innenbereich (55, 65) mit einem ersten Durchmesser ($D_i$) und einem Außenbereich (57,67) mit einem zweiten Durchmesser ($D_e$) erstreckt, wobei die Zentrierfeder (31, 32) wenigstens zwei Ausschnitte (50, 60) aufweist, die jeweils einen Zweig bilden, der wenigstens einen Abschnitt (51, 61) hat, dessen Konkavität der Außenseite (67) der Feder (31, 32) zugewandt ist, **dadurch gekennzeichnet, dass** das bewegliche Teil über wenigstens eine Feder vom Typ Spiralfeder ($22, 22_1$ bis $22_4$) gefedert ist.

2. Vorrichtung nach Anspruch 1, **dadurch gekennzeichnet, dass** wenigstens ein Ausschnitt (50, 60) wenigstens teilweise spiralförmig ist.

3. Vorrichtung nach Anspruch 2, **dadurch gekennzeichnet, dass** wenigstens ein Abschnitt (51, 61) ein Teil einer parabolischen Spirale ist.

4. Vorrichtung nach einem der Ansprüche 1 bis 3, **dadurch gekennzeichnet, dass** wenigstens ein Ausschnitt (50, 60) einen geraden Außenabschnitt (52, 62) aufweist.

5. Vorrichtung nach einem der Ansprüche 1 bis 4, **dadurch gekennzeichnet, dass** jeder Ausschnitt 1 bis 1,5 mal um den Umfang der Zentrierfeder (31, 32) läuft.

6. Vorrichtung nach einem der Ansprüche 1 bis 4, **dadurch gekennzeichnet, dass** die Zentrierfeder (31, 32) 3 Ausschnitte (50, 60) aufweist.

7. Vorrichtung nach einem der Ansprüche 1 bis 5, **dadurch gekennzeichnet, dass** die Zentrierfeder (31, 32) 4 Ausschnitte (50, 60) aufweist.

8. Vorrichtung nach Anspruch 7, **dadurch gekennzeichnet, dass** sich jeder Ausschnitt (50, 60) im wesentlichen über einmal den Umfang der Zentrierfeder (31, 32) erstreckt.

9. Vorrichtung nach einem der vorhergehenden Ansprüche, **dadurch gekennzeichnet, dass** die Zentrierfeder (31, 32) von einer Aufschichtung einzelner Flachfedern gebildet ist.

**Claims**

1. A damper device for damping vibration, the device comprising an energy converter device mounted on a baseplate for fixing to a structure, the energy converter device including a moving portion that presents at least one flat centering spring (31, 32) extending between an inside region (55, 65) having a first diameter ($D_i$) and an outside region (57, 67) having a second diameter ($D_e$), said centering spring (31, 32) presenting at least two cutouts (50, 60), each being in the form of a branch having at least one segment (51, 61) turning its concave side towards the outside (67) of the spring (31, 32), the damper device being **characterized in that** the moving portion is suspended by at least one helical-spring type spring.

2. A device according to claim 1, **characterized in that** at least one cutout (50, 60) is spiral-shaped, at least in part.

3. A device according to claim 2, **characterized in that** at least one segment (51, 61) is a portion of a parabolic spiral.

4. A device according to any one of claims 1 to 3, **characterized in that** at least one cutout (50, 60) presents an outer segment that is straight (52, 62).

5. A device according to any one of claims 1 to 4, **characterized in that** each cutout makes 1 to 1.5 turns around the perimeter of the centering spring (31, 32).

6. A device according to any one of claims 1 to 4, **characterized in that** the centering spring (31, 32) has three cutouts (50, 60).

7. A device according to any one of claims 1 to 5, **characterized in that** the centering spring (31, 32) has four cutouts (50, 60).

8. A device according to claim 7, **characterized in that** each cutout (50, 60) extends over substantially one turn of the periphery of the centering spring (31,32).

9. A device according to any preceding claim, **characterized in that** the centering spring (31, 32) is constituted by a stack of individual flat springs.

FIG.1

FIG.2a

FIG.2b

FIG.3

FIG.4